# EUROPEAN PATENT APPLICATION

(11) **EP 3 336 278 A1**
(43) Date of publication of application: **20.06.2018**
(21) Application number: 17181789.3
(22) Date of filing: 18.07.2017
(51) Int. Cl.: E04F 15/10, B32B 3/02, E04F 15/02, B32B 37/08, B32B 37/02

(54) **RIGID POLYVINYL CHLORIDE FLOOR TILE AND PROCESS FOR PRODUCING THE SAME**

(30) Priority: 16.12.2016 CN 201611169521
(71) Applicant: Minghe(Lutai) Technology Co., Ltd., Lutai Economic Development Zone, Ninghe County Tianjin 301506 (CN)
(72) Inventor: ZHANG, Mingqi, Tianjin, Tianjin 301506 (CN)
(74) Representative: Patentanwälte Bressel und Partner mbB

(57) **Abstract**

The present invention provides a rigid polyvinyl chloride floor tile comprising, in order from top to bottom, a protective layer, a decorative layer, a support layer and a balance layer, wherein the rigid polyvinyl chloride floor tile has a thermal dimensional shrinkage of 0-0.15% as determined in accordance with European Standard EN434, and a Shore-D hardness of 60°-90°. The present invention also provides a process for preparing the rigid polyvinyl chloride floor tile.

## Description

### Technical field

The present invention relates to building materials and methods for their manufacture, and more particularly to rigid polyvinyl chloride (PVC) floor tile and process for producing the same.

### Technical background

With the improvement of living standards, people are increasingly concerned about living environment. Floor tile as one of the most important part of interior decoration, of course, received more attention. At present, widely used traditional floor tiles include: wood tiles, stone tiles, composite tiles and so on.

However, the properties of the above floor tiles and their paving methods have obvious shortcomings. The representative products of wood tiles, stone tiles, and composite tiles are, respectively, reinforced tiles, stoneware tiles, and composite solid wood tiles, but these broadly used traditional floor files are all belong to super rigid floor tiles. In addition, stoneware tile has poor walking feel and slippery surface, especially after contacting with water, and people walking on it would easily fall down. Reinforced tile and composite solid wood tile belong to ligneous tiles, which have shortcomings such as undesired formaldehyde content and poor waterproof property.

In recent years polyvinyl chloride (PVC) floor tile as a representative product of flexible flooring product gradually replaces traditional flooring materials by virtue of its good waterproof property, zero formaldehyde content, etc., and has been used more and more.

However, as compared with the traditional flooring materials, PVC floor tile has a drawback that the requirements for the ground surface to be paved are high. It is required to subject the ground to be paved to a self-leveling process in order to obtain a good decorative effect, which, to a certain extent, limits the application of PVC tiles. As such, it is an urgent need to develop a new type of PVC floor tile which is less demanding on the ground surface.

Indoor wood plastic composite (WPC) tile solves this problem to a certain extent. A typical WPC tile has an upper layer of dry semi-rigid PVC, and a lower layer of extruded foam board. The upper layer and the lower layer are bonded together with an adhesive and some products still have a mute pad attached to the lower layer.

The overall thickness of an indoor WPC file is 5.0mm-7.5mm. However, the size of WPC tile is unstable because it is significantly affected by temperature and humidity. Upon heating, it's dimensional shrinkage is big causing residual depression, and the tile is prone to warping.

In actual use of an indoor WPC tile, due to the long-term affect caused by dimensional change of the tile, the lock of the tile suffers from expansion and contraction alternately, and thus the tile is prone to tripping, fracture, debonding, and deformation. The application of the indoor WPC tile also has limitation, and it generally cannot be used in a construction site with large area.

### Content of the Invention

The present invention provides a rigid polyvinyl chloride floor tile, which comprises, in order from top to bottom, a protective layer, a decorative layer, a support layer and a balance layer, wherein the rigid polyvinyl chloride floor tile has a thermal dimensional shrinkage of 0-0.15% as determined in accordance with European Standard EN434, and a Shore-D hardness of 60°-90°.

In a preferred embodiment of the rigid polyvinyl chloride floor tile according to the present invention, the protective layer is a polyvinyl chloride layer coated with an UV coating layer, wherein the polyvinyl chloride layer is used as a substrate of the protective layer, and the polyvinyl chloride layer comprises 65-100% by weight of polyvinyl chloride, 0 to 35% by weight of a plasticizer, and 0 to 5% by weight of a Ca-Zn stabilizer.

The plasticizer is one or more selected from the group consisting of diisononyl phthalate (DINP), dioctyl terephthalate (DOPT), citrate esters, epoxy soybean oil, etc.

The protective layer also can be only an UV coating layer. There is no specific limitation on the UV coatings. It can be a known commercially available UV coating, such as epoxy acrylates, polyurethanes, polyurethane acrylates, polyester acrylates, polyether acrylates, acrylated polyacrylic resins and unsaturated polyesters. The thickness of the protective layer is preferably 0.05 mm to 1 mm. The protective layer is used to increase the abrasion resistance of the rigid polyvinyl chloride floor tile and to reduce wear and tear, so that the rigid polyvinyl chloride floor tile can maintain good appearance after a long-term use.

In a preferred embodiment of the rigid polyvinyl chloride floor tile according to the present invention, the decorative layer is a patterned polyvinyl chloride film. It can be obtained by directly printing or thermal transferring a pattern on a polyvinyl chloride film substrate. The polyvinyl chloride film preferably comprises 40 to 100% by weight of polyvinyl chloride, and 0 to 60% by weight of inorganic filler selected from the group consisting of calcium carbonate, talc and combination thereof. If necessary, a pigment, such as titanium dioxide, carbon black, brown toner and so on, can be added into the decorative layer. The polyvinyl chloride film of the decorative layer has a thickness of 0.05-0.12mm. The decorative layer makes the rigid polyvinyl chloride floor tile have a good visual effect.

In a preferred embodiment of the rigid polyvinyl chloride floor tile according to the present invention, the support layer comprises 100 parts by weight of polyvinyl chloride, 0 to 30 parts by weight of a plasticizer, 100 to 750 parts by weight of an inorganic filler selected from the group consisting of calcium carbonate, kaolin, talc, and any combination thereof, 0-20 parts by weight of a toughening agent or an impact modifier, and 0-5 parts by weight of rosin. The plasticizer is preferably one or more selected from the group consisting of diisononyl phthalate (DINP), dioctyl terephthalate (DOPT), citrate esters, and epoxy soybean oil. The toughening agent or impact modifier is preferably selected from the group consisting of chlorinated polyethylene and acrylic ester processing additives, such as methyl methacrylate-butadiene-styrene terpolymer (MBS) and acrylate polymers (ACR). The thickness of the support layer is in the range of 0.1 mm to 10 mm and the Shore-D hardness of the support layer is greater than 70°, preferably 70-90°. The floor tile may comprise one or more support layers.

In a preferred embodiment of the rigid polyvinyl chloride floor tile according to the present invention, the balance layer comprises 100 parts by weight of polyvinyl chloride, 0 to 40 parts by weight of a plasticizer, 100 to 550 parts by weight of calcium carbonate, 0-20 parts by weight of a toughening agent or an impact modifier, and 0-5 parts by weight of rosin. The plasticizer is preferably one or more selected from the group consisting of diisononyl phthalate (DINP), dioctyl terephthalate (DOPT), citrate esters, and epoxy soybean oil. The toughening agent or impact modifier is preferably selected from the group consisting of chlorinated polyethylene and acrylic ester processing additives, such as methyl methacrylate-butadiene-styrene terpolymer (MBS) and acrylate polymers (ACR). The thickness of the balance layer is in the range of 0.1 mm to 10 mm and the Shore-D hardness of the balance layer is 65-80°. This balance layer reduces the requirements on the ground surface to be paved.

In a preferred embodiment of the rigid polyvinyl chloride floor tile according to the present invention, a foam layer is provided between the decorative layer and the support layer, between the support layer and the balance layer, and/or under the balance layer to improve properties such as mute effect and dimensional stability of the tile. The foam layer is made of a foam material selected from the group consisting of polyvinyl chloride foam, ethylene-vinyl acetate (EVA) foam, polypropylene (PP) foam, polyethylene (PE) foam and polystyrene (PS) foam, and optionally a fibrous material is added in the foam layer.

In a preferred embodiment of the rigid polyvinyl chloride floor tile according to the present invention, a chamfer is formed at the peripheral edge of the tile, i.e., the angle at the boundary of the upper surface and the vertical side surface of the tile is chamfered into an upward slope of 15-60 degrees, and the horizontal width of the slope is in the range of 0.5 times of the thickness of the protective layer to 3.8 times of the thickness of the floor tile.

In a preferred embodiment of the rigid polyvinyl chloride floor tile according to the present invention, a decorative coating is applied to the upward slope of the tile. The coating is mainly selected from the group consisting of acrylic resins, urethane resins and epoxy resins. The coating layer also comprises paints, pigments and/or inks.

The rigid polyvinyl chloride floor tile of the present invention as a whole has a Shore D-type hardness of 60-90° and a thermal dimensional shrinkage of 0 to 0.15%, preferably 0 to 0.08%, as measured by European Standard EN434.

The present invention also provides a process for preparing a rigid polyvinyl chloride floor tile. The process comprises the following steps:
pre-preparing a balance layer, a decorative layer, and optionally a polyvinyl chloride layer, which is used as the substrate of a protective layer;
preparing a support layer by mixing the raw materials in a mixer, internal milling and open milling the raw materials and then calendaring the materials to obtain a support layer,
laminating the support layer with the pre-prepared balance layer, decorative layer and optionally the polyvinyl chloride layer in an order of balance layer, support layer, decorative layer, and the optional polyvinyl chloride layer, embossing the laminated body and cooling the laminated body in a stepwise cooling step, then on-line applying an UV coating to form a protective layer with the optional polyvinyl chloride layer as a substrate of the protective layer, tempering and on-line molding the product to obtain a polyvinyl chloride floor tile, wherein
the preparation process of the balance layer is the same as the preparation process of the support layer,
the decorative layer is obtained by directly printing or thermal transferring a pattern on a polyvinyl chloride film substrate,
the polyvinyl chloride layer, which is optionally present as a substrate of the protective layer substrate, and the polyvinyl chloride film as a substrate of the decorative layer each is prepared by uniformly mixing the formulation raw materials, plasticizing the mixture in an extruder, calendering by a calender and then cooling and molding.

In the process for preparing a rigid polyvinyl chloride floor tile according to the present invention, the temperatures for the internal milling, open milling, laminating, and calendaring of the various layers are preferably in the range of 130-145°C, and more preferably at 140°C.

In a preferred embodiment of the process for preparing a rigid polyvinyl chloride floor tile according to the present invention, the step of laminating the support layer, the balance layer, the decorative layer and optionally the polyvinyl chloride layer used as a substrate of the protective layer is carried out on-line in the process step of preparing the support layer. The temperature for the lamination is 130-145°C, and preferably at 140°C.

In a preferred embodiment of the process for preparing a rigid polyvinyl chloride floor tile according to the present invention, the step of laminating the support layer, the balance layer, the decorative layer and optionally the polyvinyl chloride layer used as a substrate of the protective layer is carried out by calendaring these layers in an calendar at a temperature of 130-145°C and a press of 40-80Kg for 20 to 40 minutes, wherein there are one or more support layers.

In a preferred embodiment of the process for preparing a rigid polyvinyl chloride floor tile according to the present invention, the stepwise cooling step comprises lowering the temperature of the floor tile stage by stage, for example, the temperature in the first stage can be 70-80°C, the temperature in the second stage can be 40-50°C and the temperature in the third stage can be 0-23°C. The mechanism is to make the floor tile shrink at the Vicat softening point temperature, then the molecular flow is gradually decreased and ready to be fixed, and finally fixed. After going through the stepwise cooling step, when the tile is subjected to different temperatures, the shrinkage of the tile will be significantly reduced.

In a preferred embodiment of the process for preparing a rigid polyvinyl chloride floor tile according to the present invention, the tempering temperature is preferably 80 to 100°C, more preferably 85 to 90°C and the tempering time is preferably from 1 to 10 minutes, more preferably from 3 to 5 minutes, and then the floor tile is cooled to about 23°C. After going through the tempering step the shrinkage of the floor tile at different temperatures will be reduced.

By adopting the process for preparing a rigid polyvinyl chloride floor tile according to the present invention, not only the production yield is improved, but also the stability of the produced floor tile is greatly improved and the sensitivity to temperature of the floor tile is significantly reduced.

Both the support layer and the balance layer of the rigid polyvinyl chloride tile of the present invention have high hardness, and the rigid balance layer reduces the requirements on the ground surface. The PVC protective layer avoids the noise problem, slipperiness problem, etc. of traditional reinforced tile, composite solid wood tile and stoneware tile. The rigid polyvinyl chloride floor tile of the present invention not only overcomes the defects of traditional tiles and indoor wood-plastic composite tiles (WPC), but also has further advantages such as low cost and convenient producing process, and thus have high practical application value.

### Description of Drawings

Figure 1 is a schematic drawing of the structure of a rigid polyvinyl chloride floor tile according to an embodiment of the present invention.
Figure 2 is a schematic flow chart of a process for producing a rigid polyvinyl chloride floor tile according to an embodiment of the present invention.
Figure 3 is a schematic drawing of a chamfer at the peripheral edge of a rigid polyvinyl chloride floor tile according to one embodiment of the present invention.

### Embodiments of the Invention

Unless otherwise defined, all technical and scientific terms used herein have the same meanings commonly understood by an ordinary skilled person in the art. In case of conflict, the definitions provided in present specification prevail.

Unless otherwise indicated, all percentages, parts, and proportions are given by weight.

The term "polyvinyl chloride" used in present application denote any polyvinyl chloride commercially available or obtainable by any known polymerization method. Commercially available polyvinyl chloride with a polymerization degree K as K60 or K67 is particular preferred.

The rigid polyvinyl chloride tile of the present invention and the process for preparing the same are further illustrated below with reference to the accompanying drawings.

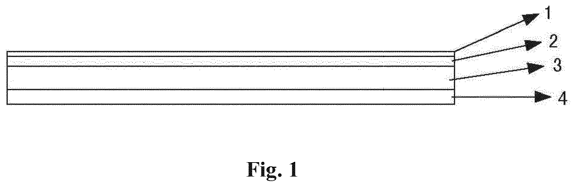

Figure 1 is a schematic drawing of the structure of a rigid polyvinyl chloride floor tile according to an embodiment of the present invention. The polyvinyl chloride floor tile comprises, from top to bottom, a protective layer 1, a decorative layer 2, a support layer 3 and a balance layer 4. Protective layer 1 may be a layer formed by applying a UV coating on a polyvinyl chloride substrate or may be just a layer of a UV coating. Decorative layer 2 is a layer formed by printing a desired pattern on a polyvinyl chloride film substrate. Support layer 3 may be one or more layers.

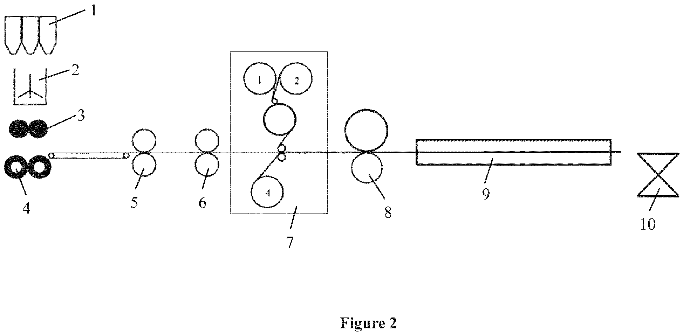

Figure 2 is a schematic flow chart of a process for producing a rigid polyvinyl chloride floor tile according to an embodiment of the present invention. In the process, raw materials of the supporting layer formulation are fed into a high-speed mixer 2 through an automatic metering system 1 so that the materials are mixed uniformly, then the materials are subjected to internal milling in an internal mill 3, open milling in a rolling mill 4, and next the materials are calendared by entering into two double-roll horizontal calendars 5 and 6 to obtain a support layer with a thickness in the range of 0.1-10mm and to ensure the difference of the thickness in the range of less than 0.1mm.

Subsequently, the support layer is directly laminated on-line with previously prepared a polyvinyl chloride layer (which is used as a substrate of protective layer), a decorative layer and a balance layer, and then embossed in an embossing machine 8 to press the protective layer substrate, the decorative layer, the support layer and the balance layer in this order firmly together. The laminated product is then cooled in a stepwise cooling device 9, and after cooling a UV coating (not shown) is applied to the polyvinyl chloride layer which is used as the substrate of protective layer. The obtained floor tile is then tempered and cooled and collected from a collecting device 10.

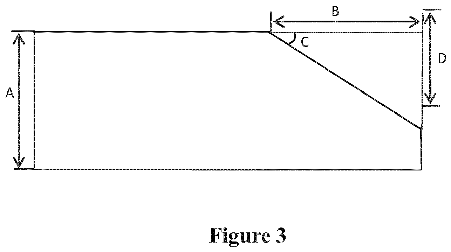

Figure 3 is a schematic drawing of a chamfer at the peripheral edge of a rigid polyvinyl chloride floor tile according to an embodiment of the present invention. In Figure 3, the vertical side of the tile is formed into an upward slope, where A is the thickness of the tile, B is the horizontal width of the slope, C is the angle of the chamfer, and D is the height of the slope (sometimes D = A). It is preferable to apply on the slope a decorative abrasion resistant coating, such as golden epoxy resin or polyurethane coating having wood grain effect, so that the floor tile as a whole becomes more beautiful.

### Examples

The present invention will now be described in further detail by way of examples, but it is not to be construed as limiting the scope of the invention.

### Example 1: Preparation of a rigid polyvinyl chloride floor tile

### Raw materials:

Polyvinyl chloride: Nanya Plastics, K60 Polyvinyl Chloride
DOTP (Dioctyl Terephthalate): Qilu Petrochemical, LF-30
Ca-Zn stabilizer: Singapore, SUNACE SAK-CZL39-NP
Titanium dioxide: DuPont, R900
Talc powder: Beijing Lürenao Powder Material, 800 mesh
CPE (chlorinated polyethylene): Shandong Gaoxin Chemical, 135A
Rosin: Eastman US, Foral AX-E

### Preparation of a substrate for a protective layer

135kg of polyvinyl chloride, 41.4kg of dioctyl terephthalate and 3.6kg of Ca-Zn stabilizer were uniformly mixed in a high-speed mixer, plasticized by a planetary extruder, and then calendared into a sheet by a four-roll calender, cooled by a cooling roll to obtain a polyvinyl chloride layer, which would be used as a substrate of a protective layer.

### Preparation of a decorative layer

81kg of polyvinyl chloride, 81kg of CaCO₃, 3.6kg of dioctyl terephthalate, 3.6kg of Ca-Zn stabilizer, 1.8kg of titanium dioxide and 5kg of talc powder were mixed uniformly in a high-speed mixer, plasticized in a planetary extruder and calendared into a sheet by a four-roll calendar, then the sheet was cooled by a cooling roll to obtain a polyvinyl chloride film, which would be used as a substrate of the decorative layer.

A desired pattern was printed on the above-obtained polyvinyl chloride film by thermal transfer and thus a decorative layer was obtained.

### Preparation of a balance layer

50kg of polyvinyl chloride, 13kg of dioctyl terephthalate, 90kg of CaCO₃, 1kg of Ca-Zn stabilizer, and 1kg of rosin were fed into a high-speed mixer by means of an automatic metering system to mix the materials uniformly, then the mixture was subjected to internal milling in an internal mill, open milling in a rolling mill, and calendaring by two double-roll horizontal calendars at 140°C, then cooled to obtain a balance layer.

### On-line preparation of a support layer and a whole floor tile

40kg of polyvinyl chloride, 5kg of dioctyl terephthalate, 120kg of CaCO₃, 0.8kg of Ca-Zn stabilizer, 3kg of chlorinated polyethylene, and 2Kg of rosin were fed into a high-speed mixer by means of an automatic metering system to mix the materials uniformly, the mixture was then subjected to internal milling in an internal mill, open milling in a rolling mill, and calendaring through two double-roll horizontal calendars at 140°C to form a support layer.

Then the support layer was directly on-line laminated with the above pre-prepared balance layer, decorative layer and the polyvinyl chloride layer in an order of, from bottom to top, balance layer, support layer, decorative layer, and polyvinyl chloride layer at 140°C. The laminated body was embossed to press the layers firmly together, and then cooled in a stepwise cooling device, which has three-stage cooling temperatures of 80°C, 40°C, and 20°C. Then an UV coating was applied on-line on the polyvinyl chloride layer, which serves as a substrate of the protective layer. The obtained floor tile was tempered at 90°C for 3 minutes and on-line shaped to obtain a polyvinyl chloride floor tile with a thickness of 5 mm

### Property Test

The rigid polyvinyl chloride floor tile obtained above has a thermal dimensional shrinkage of 0.08% as determined in accordance with European Standard EN434, and a Shore-D hardness of 72°.

By adopting the process according to the present invention, not only the production yield is improved, but also the stability of the produced floor tile is greatly improved and the sensitivity to temperature of the floor tile is significantly reduced.

In the preparation process of the present invention, the support layer is directly on-line laminated with the substrate of the protective layer, the decorative layer and the balance layer. As compared with the conventional process of extruding through a die and then laminating with an oil hydraulic press or the conventional calendering method, the present invention can obtain a final floor tile directly, and thus production efficiency and production capacity are improved, and the defects in traditional die extrusion process, such as bubbles and uneven plasticization, etc. are avoided.

Table 1 below shows a comparison of production capacities of three different preparation processes of floor tile.

**Table 1**

| | Traditional Die Extrusion | Traditional Calendaring | Process of the present invention |
|---|---|---|---|
| Production of tile with a thickness of 2.0mm (24 hours) | Not applicable | 80-90 tons Semi-finished product | 160-180 tons Final product |
| Production of tile with a thickness of 4.0mm (24 hours) | 12-24 tons Semi-finished product | 80-90 tons Semi-finished product | 170-180 tons Final product |
| Directly final product or not | No | No | Yes |

The present invention has been specifically described above by way of embodiments and examples, however, the embodiments and examples are not intend to limit the scope of the invention, and those skilled in the art would understand that, on the basis of the present disclosure, one can make various changes to the polyvinyl chloride floor tile, and those changes are covered by the spirit and scope of the present invention.

## Claims

1. A rigid polyvinyl chloride floor tile comprising, in order from top to bottom, a protective layer, a decorative layer, a support layer and a balance layer, wherein the rigid polyvinyl chloride floor tile has a thermal dimensional shrinkage of 0-0.15% as measured in accordance with European Standard EN434, and a Shore-D hardness of 60°-90°.

2. The rigid polyvinyl chloride floor tile according to claim 1, wherein the protective layer comprises a UV coating layer and optionally a polyvinyl chloride layer as a substrate for the UV coating layer, and the polyvinyl chloride layer comprises 65 to 100% by weight of polyvinyl chloride, 0 to 35% by weight of a plasticizer, and 0 to 5% by weight of a Ca-Zn stabilizer.

3. The rigid polyvinyl chloride floor tile according to claim 1, wherein the decorative layer is a patterned polyvinyl chloride film comprising 40 to 100% by weight of polyvinyl chloride, 0 to 60% by weight of an inorganic filler selected from the group consisting of calcium carbonate, talc and their combination, and optionally a pigment.

4. The rigid polyvinyl chloride floor tile according to claim 1, wherein the support layer comprises 100 parts by weight of polyvinyl chloride, 0 to 30 parts by weight of a plasticizer, 100 to 750 parts by weight of an inorganic filler selected from the group consisting of calcium carbonate, kaolin, talc and combination thereof, 0 to 20 parts by weight of a toughening agent or an impact modifier, and 0 to 5 parts by weight of rosin, and the floor tile comprises one or more support layers.

5. The rigid polyvinyl chloride floor tile according to claim 4, wherein the support layer has a thickness in the range of 0.1 mm to 10 mm and a Shore-D hardness in the range of 70° to 90°

6. The rigid polyvinyl chloride floor tile according to claim 1, wherein the balance layer comprises 100 parts by weight of polyvinyl chloride, 0 to 40 parts by weight of a plasticizer, 100 to 550 parts by weight of calcium carbonate, 0 to 20 parts by weight of a toughening agent or an impact modifier, and 0 to 5 parts by weight of rosin.

7. The rigid polyvinyl chloride floor tile according to claim 6, wherein the balance layer has a thickness in the range of 0.1 mm to 10 mm and a Shore-D hardness in the range of 65° to 80°

8. The rigid polyvinyl chloride floor tile according to claim 2, 4 or 6, wherein the plasticizer is one or more selected from the group consisting of diisononyl phthalate, dioctyl terephthalate, citrate esters, and epoxy soybean oil.

9. The rigid polyvinyl chloride floor tile according to claim 4 or 6, wherein the toughening agent or the impact modifier is selected from the group consisting of chlorinated polyethylene and acrylic ester processing additives.

10. The rigid polyvinyl chloride floor tile according to any one of claims 1 to 7, wherein a foam layer is provided between the decorative layer and the support layer, between the support layer and the balance layer, and/or under the balance layer, wherein the foam layer is made from a foam material selected from the group consisting of polyvinyl chloride foam, EVA foam, PP foam, PE foam and PS foam, and a fibrous material is optionally added in the foam layer.

11. The rigid polyvinyl chloride floor tile according to any one of claims 1 to 7, wherein an upward slope of 15-60 degrees is formed at the peripheral edge of the tile, and the horizontal width of the slope is in the range of 0.5 times of the thickness of the protective layer to 3.8 times of the thickness of the floor tile.

12. The rigid polyvinyl chloride floor tile according to claim 11, wherein a decorative coating is applied to the upward slope of the tile.

13. A process for preparing a rigid polyvinyl chloride floor tile according to any one of claims 1-12, comprising
pre-preparing a balance layer, a decorative layer, and optionally a polyvinyl chloride layer which is used as a substrate of a protective layer;
preparing a support layer by mixing the raw materials in a mixer, internal milling, open milling and then calendaring the mixed materials to obtain a support layer,
laminating the support layer with the pre-prepared balance layer, decorative layer and optionally the polyvinyl chloride layer in an order of balance layer, support layer, decorative layer, and the optional polyvinyl chloride layer, embossing the laminated body and cooling the laminated body in a stepwise cooling step, then on-line applying an UV coating to form a protective layer with the optional polyvinyl chloride layer as a substrate of the protective layer, tempering and on-line forming the product to obtain a polyvinyl chloride floor tile, wherein
the preparation process of the balance layer is the same as the preparation process of the support layer,
the decorative layer is obtained by directly printing or thermal transferring a pattern on a polyvinyl chloride film substrate, and
the polyvinyl chloride layer, which is optionally present as a substrate of the protective layer, and the polyvinyl chloride film as a substrate of the decorative layer each is prepared by uniformly mixing their raw materials, plasticizing the raw materials in an extruder, calendaring in a calendar, cooling and molding.

14. The process for preparing a rigid polyvinyl chloride floor tile according to claim 13, wherein the step of laminating the support layer, the balance layer, the decorative layer and optionally the polyvinyl chloride layer used as a substrate of the protective layer is carried out on-line in the process step of preparing the support layer.

15. The process for preparing a rigid polyvinyl chloride floor tile according to claim 13, wherein the step of laminating the support layer, the balance layer, the decorative layer and optionally the polyvinyl chloride layer used as a substrate of the protective layer is carried out by calendaring these layers in an calendar at a temperature of 130-145°C and a press of 40-80Kg for 20 to 40 minutes, and there are one or more support layers.

16. The process for preparing a rigid polyvinyl chloride floor tile according to any one of claims 13 to 15, wherein the stepwise cooling step comprises lowering the temperature of the floor tile stage by stage, with the temperature in the first stage being 70-80°C, the temperature in the second stage being 40-50°C, and the temperature in the third stage being 0-23°C.

17. The process for preparing a rigid polyvinyl chloride floor tile according to any one of claims 13 to 15, wherein the tempering temperature is 80 to 100°C and the tempering time is from 1 to 10 minutes.
